# EUROPÄISCHE PATENTSCHRIFT

(11) **EP 1 135 980 B1**
(45) Veröffentlichungstag und Bekanntmachung des Hinweises auf die Patenterteilung: **07.12.2005**
(21) Anmeldenummer: 01106671.9
(22) Anmeldetag: 16.03.2001
(51) Int. Cl.: A01C 7/04

(54) **Sämaschine und pneumatisches Reduzierelement**
Sowing maschine and pneumatic reducing element
Semoir et élément réducteur pneumatique

(30) Priorität: 20.03.2000 US 528691
(43) Veröffentlichungstag der Anmeldung: 26.09.2001
(73) Patentinhaber: DEERE & COMPANY, Moline, Illinois 61265-8098 (US)
(72) Erfinder: Luxon, Gary Deloy, Moline, IL 61265 (US)
(74) Vertreter: Holst, Sönke

(56) Entgegenhaltungen:
- EP-A- 0 620 963
- EP-A- 0 681 781
- DE-A- 19 522 060
- FR-A- 2 233 807
- US-A- 4 616 577
- US-A- 5 740 746

## Beschreibung

Die Erfindung betrifft entsprechend dem Oberbegriff des Anspruchs 1 eine Sämaschine zum Ablegen von Saatgut im Boden eines Felds, mit einer Mehrzahl von Messsystemen sowie einer Luftpumpe zum Erzeugen von Luftdruck, die sich in pneumatischer Verbindung mit einem pneumatischen Verzweiger befindet, mit dem die Messsysteme pneumatisch verbunden sind, und ein pneumatisches Reduzierelement nach dem Oberbegriff des Anspruchs 8.

In modernen Sämaschinen werden hochentwickelte Saatgut-Messsysteme verwendet, um die Rate, mit der Saatgut im Boden abgelegt wird, zu steuern. Viele dieser hochentwickelten Messsysteme verwenden Luftdruck, um das Ausbringen von Saat in den Boden zu steuern. In einem System wird positiver (Über-) Luftdruck verwendet. Bei anderen Systemen wird negativer Luftdruck (Unterdruck) in Form eines Vakuums verwendet, um das Saatgut abzumessen. Dieser positive oder negative Luftdruck wird durch eine Luftpumpe in Form eines Ventilators erzeugt. Der Luftdruck von der Luftpumpe wird einem pneumatischen Verzweiger zugeführt. Der Verzweiger ist wiederum pneumatisch durch Schläuche mit den einzelnen Saatgut-Messsystemen verbunden. Der Luftdruck, mit dem die einzelnen Einheiten beaufschlagt werden, ist nicht identisch. Derartige Bedingungen haben ungleiche Leistungen der Messsysteme zur Folge, die möglicherweise Unterschiede in den Besetzungen und Abständen des Saatguts von einer Reihe zur anderen Reihe zum Ergebnis haben können. Der positive oder negative Luftdruck ist bei den Messsystemen am größten, die die kürzeste pneumatische Verbindung mit der Quelle unter Druck stehender Luft haben.

Die US 5 592 974 A beschreibt ein Flussbegrenzungselement für einen Wärmetauscher in einem Kraftfahrzeug. Es hat eine im Wesentlichen zylindrische Form, damit es in einen Schlauch hineingeschoben werden kann. Dabei ist als nachteilig anzusehen, dass es mitunter zu weit in den Schlauch gelangen kann, so dass es schwierig ist, es wieder daraus zu entnehmen.

Das der Erfindung zugrunde liegende Problem wird darin gesehen, Sämaschinen dahingehend zu verbessern, dass eine gleichmäßigere Verteilung unter Druck stehender Luft zu den pneumatischen Messsystemen erzielt wird. Außerdem soll ein verbessertes Reduzierelement bereitgestellt werden.

Dieses Problem wird erfindungsgemäß durch die Lehre der Patentansprüche 1 und 8 gelöst, wobei in den weiteren Patentansprüchen Merkmale aufgeführt sind, die die Lösung in vorteilhafter Weise weiterentwickeln.

Eine Sämaschine ist mit einem Rahmen ausgestattet, der eine Vielzahl pneumatischer Messsysteme aufweist. Eine am Rahmen angeordnete Luftpumpe versorgt einen pneumatischen Verzweiger mit Druckluft mit Über- -oder Unterdruck. Der pneumatische Verzweiger ist wiederum über pneumatische Leitungen, in der Regel Schläuchen, mit den Messsystemen verbunden. Die Erfindung schlägt vor, pneumatische Reduzierelemente mit reduziertem Durchlassquerschnitt pneumatisch zwischen dem Verzweiger und einem Teil der Messsysteme anzuordnen.

Auf diese Weise erreicht man eine Angleichung des Luftdrucks, mit dem die Messsysteme beaufschlagt werden, was zu einer gleichmäßigen Ablage des Saatguts über die Breite der Sämaschine führt. Dazu werden Reduzierelemente insbesondere den Messsystemen zugeordnet, die die kürzeste Verbindung mit der Luftpumpe haben.

Der pneumatische Verzweiger kann mit Rohrstummeln versehen sein, die zum Anschluss des zum Messsystem führenden Schlauchs dienen. In diese Rohrstummel können die pneumatischen Reduzierelemente eingesetzt werden. Letztere sind vorzugsweise aus Kunststoff hergestellt und haben einen zylindrischen Hülsenabschnitt, der einen inneren Durchgang definiert, sowie einen kreisförmigen Deckelabschnitt, der einen verkleinerten Durchlass aufweist. Der innere Durchgang steht in pneumatischer Verbindung mit dem verkleinerten Durchlass. Der Deckelabschnitt ist auch mit einer sich radial erstreckenden Kante versehen, die sich über den zylindrischen Hülsenabschnitt hinaus nach außen erstreckt und einen positiven Anschlag gegen weiteres Einschieben bereitstellt.

In den Zeichnungen ist ein nachfolgend näher beschriebenes Ausführungsbeispiel der Erfindung dargestellt. Es zeigt:
- Fig. 1: eine Draufsicht auf ein Reihenpflanzgerät, das eine Vielzahl einzelner Reihenpflanzeinheiten aufweist,

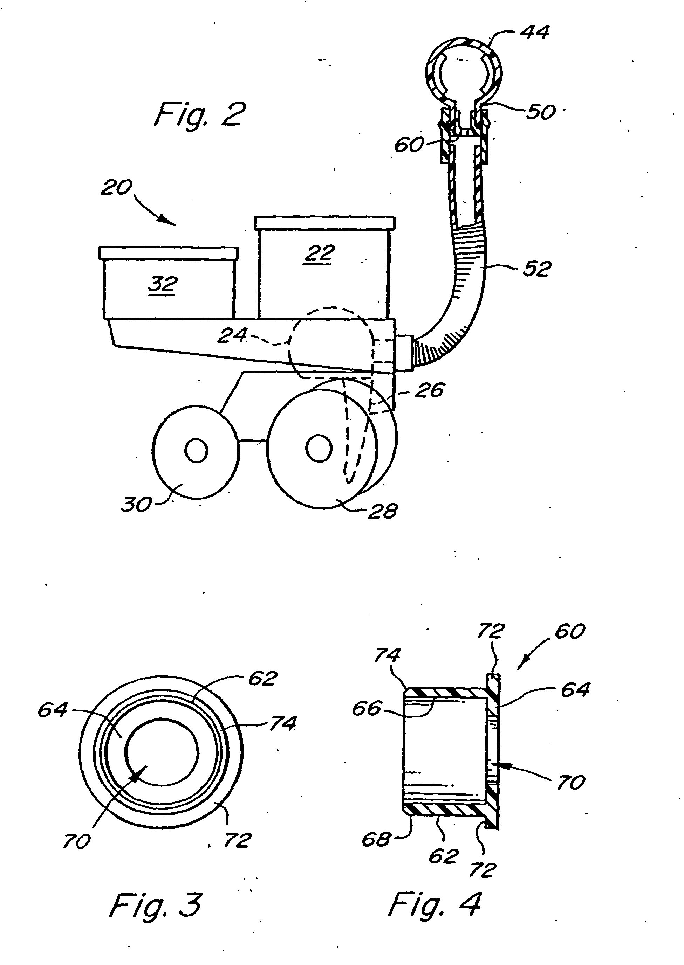

- Fig. 2: eine halbschematische Seitenansicht einer Reihenpflanzeinheit und des pneumatischen Verteilersystems,
- Fig. 3: eine Draufsicht auf ein pneumatisches Reduzierelement und,
- Fig. 4: einen seitlichen Querschnitt des pneumatischen Reduzierelements.

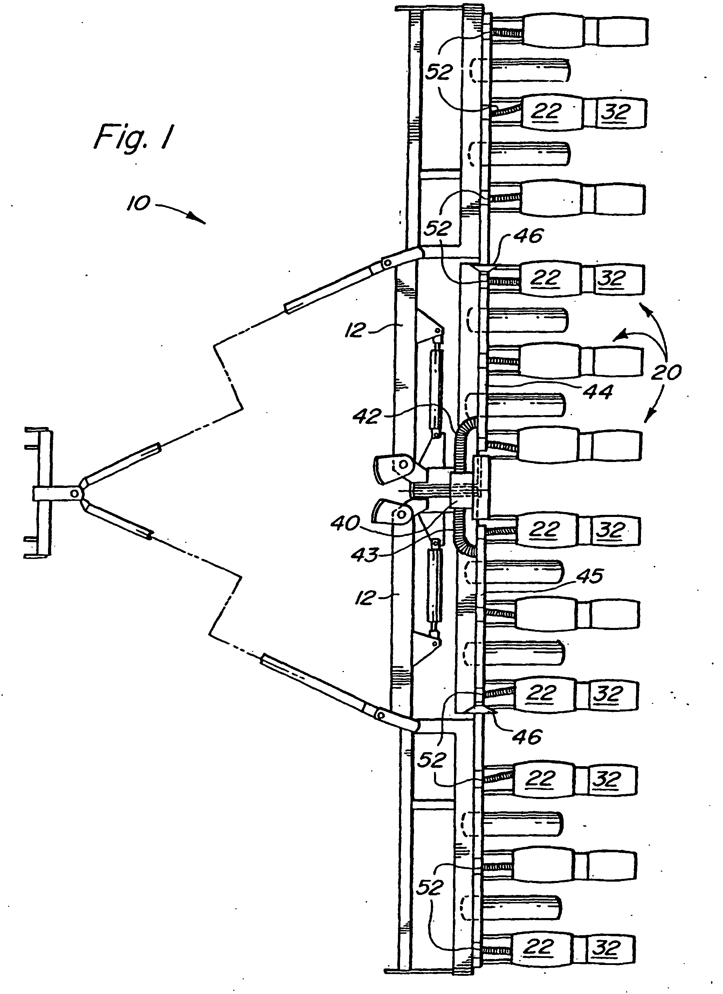

Figur 1 ist eine Draufsicht auf eine Sämaschine 10. In der gezeigten Ausführungsform ist die Sämaschine ein Reihenpflanzgerät, jedoch könnte die vorliegende Erfindung an jeder anderen Sämaschine verwendet werden, die pneumatische Messsysteme aufweist, einschließlich Drillmaschinen und pneumatischer Sämaschinen. Die Sämaschine 10 umfasst einen Rahmen 12, der in eine in Figur 1 gezeigte Arbeitsposition ausgezogen und in eine Transportkonfiguration eingeklappt werden kann. Eine Vielzahl von Reihenpflanzeinheiten 20 sind am Rahmen 12 angebracht. Jede der Reihenpflanzeinheiten 20 ist mit einem Saatgutbehälter 22 ausgestattet, der Saatgut einem Messsystem 24 zuführt, welches das Saatgut abmisst. Das abgemessene Saatgut wird durch ein Saatgutrohr 26 vom Messsystem 24 einer Pflanzfurche zugeführt, die im Erdboden von einem Furchenöffner 28 erstellt wurde. Die Pflanzfurche wird durch im Winkel angeordnete Schließräder 30 geschlossen. Die Reihenpflanzeinheit 20 kann auch mit einem Pestizidbehälter 32 zum Mitführen von Pestiziden ausgestattet sein, die während des Pflanzvorgangs ausgebracht werden.

Das Messsystem 24 ist in der dargestellten Ausführungsform ein Vakuummesssystem des gegenwärtig von der Anmelderin vertriebenen Typs. Daher wird negativer Luftdruck (Unterdruck) verwendet, um Saatgut mit einer Saatgutscheibe anzuziehen, während sie eine Saatgutpfütze durchläuft. Das angesaugte Saatgut verbleibt im Kontakt mit der Saatgutscheibe, bis das Vakuum entfernt wird und das Saatgut in das Saatgutrohr 26 fällt. Die vorliegende Erfindung könnte auch bei Systemen mit positivem Druck (Überdruck) benutzt werden, bei denen ein positiver Luftdruck verwendet wird, um das Saatgut einer Saatgutscheibe zuzuführen, während sie sich durch eine Saatgutpfütze dreht. Das Entfernen des positiven Luftdrucks setzt das. Saatgut von der Saatgutscheibe frei und das freigesetzte Saatgut fällt dann in das Saatgutrohr 26.

Eine Luftpumpe 40 in Form eines Ventilators erzeugt einen Luftdruck in zwei Luftrohren 42 und 43. Das Luftrohr 42 erstreckt sich zwischen der Luftpumpe 40 und dem pneumatischen Verzweiger 44. Das Luftrohr 43 erstreckt sich zwischen der Luftpumpe 40 und dem pneumatischen Verzweiger 45. Beide pneumatischen Verzweiger 44 und 45 umfassen ein zylindrisches Rohr, das sich entlang des Rahmens 12 erstreckt. Beide pneumatischen Verzweiger 44 und 45 umfassen zwei Abschnitte, die durch eine Steckkopplung 46 (in Form einer so genannten Flapper-Kopplung) miteinander gekoppelt sind. Die Steckkopplung 46 erlaubt, dass jeder der Verzweiger 44, 45 aufgetrennt wird, wenn der Rahmen 12 des Reihenpflanzgeräts gefaltet wird, und wieder vereinigt, wenn der Rahmen 12 in seine Arbeitskonfiguration ausgeklappt wird.

Jeder der pneumatischen Verzweiger 44 und 45 ist mit sich radial erstreckenden Rohrstummeln 50 ausgestattet, die mit Luftschläuchen 52 gekoppelt sind, um den Luftdruck in den pneumatischen Verzweigern den einzelnen Saatgut-Messsystemen 24 zuzuführen. Ein pneumatisches Reduzierelement 60 mit einem verengten Querschnitt ist zwischen den pneumatischen Verzweigern 44 und 45 und einigen der Reihenpflanzeinheiten 20 angeordnet. Jedes pneumatische Reduzierelement 60 umfasst einen zylindrischen Hülsenabschnitt 62 und einen kreisförmigen Deckelabschnitt 64. Der zylindrische Hülsenabschnitt 62 ist mit einer zylindrischen inneren Oberfläche 66, die einen zylindrischen Durchlass definiert, und einer zylindrischen äußeren Oberfläche 68 ausgestattet. Der Deckelabschnitt 64 ist mit einem kreisförmigen, verengten Durchlass 70 ausgestattet, der einen kleineren Durchmesser als der Durchlass des Hülsenabschnitts 62 aufweist. Außerdem hat der Deckelabschnitt 64 eine sich radial erstreckende Kante 72, die sich über die äußere Oberfläche 68 des Hülsenabschnitts 62 hinaus erstreckt.

Bei der bevorzugten Ausführungsform wird das pneumatische Reduzierelement 60 in die sich radial erstreckenden Rohrstummel 50 eingesetzt, die sich pneumatisch der Luftpumpe 40 am nächsten befinden. Beispielsweise wären pneumatische Reduzierelemente 60 jeweils in den beiden Rohrstummeln 50 angeordnet, die den Luftrohren 42 und 43 am nächsten benachbart sind, so dass der Unterdruck an den beiden zugehörigen Messsystemen 24 vermindert ist und besser mit dem Luftdruck an den übrigen Messsystemen 24 zusammenpasst. Obwohl in diesem Beispiel nur vier pneumatische Reduzierelemente 60 an der Sämaschine 10 angebracht sind, könnten zusätzliche pneumatische Reduzierelemente 60 (auch anderen Durchlassquerschnitts) eingefügt werden, um den Luftdruck, mit dem die Messsysteme 24 beaufschlagt werden, besser auszugleichen. Es wäre jedoch nur ein Teil der Messsysteme 24 mit pneumatischen Reduzierelementen 60 versehen, und diese wären den Messsystemen 24 zugeordnet, die pneumatisch am nächsten zur Luftpumpe 40 sind.

Die zylindrische äußere Oberfläche 68 des Hülsenabschnitts 62 liegt an der inneren Oberfläche des sich radial erstreckenden Rohrstummels 50 an, wobei die sich radial erstreckende Kante 72 einen positiven Anschlag gegen weiteres Einschieben bereitstellt. Um das Einsetzen in den Rohrstummel 50 zu erleichtern, ist das Ende des Hülsenabschnitts 62 gegenüber dem Deckelabschnitt 64 mit einer zylindrischen, abgeschrägten Kante 74 ausgestattet.

## Patentansprüche

1. Sämaschine (10) zum Ablegen von Saatgut im Boden eines Felds, mit einer Mehrzahl von Messsystemen (24) sowie einer Luftpumpe (40) zum Erzeugen von Luftdruck, die sich in pneumatischer Verbindung mit einem pneumatischen Verzweiger (44, 45) befindet, mit dem die Messsysteme (24) pneumatisch verbunden sind, **gekennzeichnet durch** mindestens ein pneumatisches Reduzierelement (60) mit reduziertem Durchlassquerschnitt, das in der pneumatischen Verbindung zwischen dem Verzweiger (44, 45) und einem der Messsysteme (24) angeordnet ist.

2. Sämaschine (10) nach Anspruch 1, **dadurch gekennzeichnet, dass** das pneumatische Reduzierelement (60) oder die pneumatischen Reduzierelemente (60) mit dem Messsystem (24) oder den Messsystemen (24) zusammenwirkt oder zusammenwirken, das oder die pneumatisch der Luftpumpe (40) am Nächsten ist oder sind.

3. Sämaschine (10) nach Anspruch 1 oder 2, **dadurch gekennzeichnet, dass** die Luftpumpe (40) einen Unterdruck erzeugt.

4. Sämaschine (10) nach einem der vorhergehenden Ansprüche, **dadurch gekennzeichnet, dass** die Messsysteme (24) durch Luftschläuche (52) mit dem Verzweiger (44, 45) verbunden sind, und das pneumatische Reduzierelement (60) zwischen einem Luftschlauch (52) und dem Verzweiger (44, 45) angeordnet ist.

5. Sämaschine (10) nach einem der vorhergehenden Ansprüche, **dadurch gekennzeichnet, dass** der Verzweiger (44, 45) mit sich radial erstreckenden Rohrstummeln (50) versehen ist, an die jeweils ein zu einem Messsystem (24) führender Luftschlauch (52) befestigt ist.

6. Sämaschine (10) nach einem der vorhergehenden Ansprüche, **dadurch gekennzeichnet, dass** das pneumatische Reduzierelement (60) einen Hülsenabschnitt (62) mit einer äußeren Oberfläche (68) und einen Deckelabschnitt (64) mit verringertem Durchlassquerschnitt aufweist.

7. Sämaschine (10) nach Anspruch 6, **dadurch gekennzeichnet, dass** die äußere Oberfläche (68) des Hülsenabschnitts (62) des Reduzierelements (60) im montierten Zustand an der inneren Oberfläche eines Rohrstummels (50) anliegt.

8. Pneumatisches Reduzierelement (60) für eine Sämaschine (10) nach einem der vorhergehenden Ansprüche, mit einem zylindrischen Hülsenabschnitt (64) mit einer äußeren Oberfläche (68) und einer inneren Oberfläche (66), die einen zylindrischen Durchlass mit einem ersten Durchmesser definiert, sowie mit einem kreisförmigen Deckelabschnitt (64), der den zylindrischen Durchlass des Hülsenabschnitts (62) abdeckt und einen kreisförmigen, pneumatisch mit dem Durchlass des Hülsenabschnitts (62) verbundenen Durchlass (70) mit einem zweiten Durchmesser aufweist, der kleiner als der erste Durchmesser ist, **dadurch gekennzeichnet, dass** der Deckelabschnitt (64) eine Kante (72) aufweist, die sich über die äußere Oberfläche (68) des Hülsenabschnitts (62) erstreckt.

9. Pneumatisches Reduzierelement (60) nach Anspruch 8, **dadurch gekennzeichnet, dass** der Hülsenabschnitt (62) an dem vom Deckelabschnitt (64) beabstandeten Ende eine abgeschrägte Kante (74) aufweist.

## Claims

1. A seeder (10) for depositing seeds in the soil of a field, with a plurality of metering systems (24) and an air pump (40) for creating air pressure, which is in pneumatic communication with a pneumatic distributor (44, 45), to which the metering systems (24) are pneumatically coupled, **characterized by** at least one pneumatic reducing element (60) with a passage of reduced cross-section, which is disposed in the pneumatic connection between the distributor (44, 45) and one of the metering systems (24).

2. A seeder (10) according to claim 1, **characterized in that** the pneumatic reducing element (60) or the pneumatic reducing elements (60) cooperates or cooperate with the metering system (24) or the metering systems (24) which is or are closest pneumatically to the air pump (40).

3. A seeder (10) according to claim 1 or 2, **characterized in that** the air pump (40) creates a negative pressure.

4. A seeder (10) according to any of the preceding claims, **characterized in that** the metering systems (24) are connected to the distributor (44, 45) by air hoses (52) and the pneumatic reducing element (60) is disposed between an air hose (52) and the distributor (44, 45).

5. A seeder (10) according to any of the preceding claims, **characterized in that** the distributor (44, 45) is provided with radially extending stub tubes (50) on each of which an air hose (52) leading to a metering system (24) is fixed.

6. A seeder (10) according to any of the preceding claims, **characterized in that** the pneumatic reducing element (60) comprises a sleeve section (62) with an outer surface (68) and a cover section (64) with a passage of reduced cross-section.

7. A seeder (10) according to claim 6, **characterized in that** the outer surface (68) of the sleeve section (62) of the reducing element (60) lies against the inner surface of a stub tube (50) in the assembled state.

8. A pneumatic reducing element (60) for a seeder (10) according to any of the preceding claims, with a cylindrical sleeve section (64) with an outer surface (68) and an inner surface (66) which defines a cylindrical passage with a first diameter, as well as with a circular cover section (64) which covers the cylindrical passage of the sleeve section (62) and has a circular passage (70) pneumatically connected to the passage of the sleeve section (62), with a second diameter which is smaller than the first diameter, **characterized in that** the cover section (64) has an edge (72) which extends beyond the outer surface (68) of the sleeve section (62).

9. A pneumatic reducing element (60) according to claim 8, **characterized in that** the sleeve section (62) has a bevelled edge (74) at the end remote from the cover section (64).

## Revendications

1. Semoir (10) pour déposer des semences dans le sol d'un champ, avec une pluralité de systèmes de mesure (24) ainsi qu'une pompe à air (40) pour la génération d'air comprimé qui est en liaison pneumatique avec un branchement pneumatique (44, 45) avec lequel les systèmes de mesure (24) sont en liaison pneumatique, **caractérisé par** au moins un élément de réduction pneumatique (60) avec une section de passage réduite qui est disposé dans la liaison pneumatique entre le branchement (44, 45) et l'un des systèmes de mesure (24).

2. Semoir (10) selon la revendication 1, **caractérisé en ce que** l'élément de réduction pneumatique (60) ou les éléments de réduction pneumatique (60) coopère ou coopèrent avec le système de mesure (24) ou les systèmes de mesure (24) qui est ou sont le plus près pneumatiquement de la pompe à air (40).

3. Semoir (10) selon la revendication 1 ou 2, **caractérisé en ce que** la pompe à air (40) génère une dépression.

4. Semoir (10) selon l'une des revendications précédentes, **caractérisé en ce que** les systèmes de mesure (24) sont reliés au branchement (44, 45) par des flexibles à air (52) et **en ce que** l'élément de réduction pneumatique (60) est disposé entre un flexible à air (52) et le branchement (44, 45).

5. Semoir (10) selon l'une des revendications précédentes, **caractérisé en ce que** le branchement (44, 45) est muni de tronçons de tube (50) s'étendant radialement auxquels est fixé un flexible à air (52) conduisant à un système de mesure (24).

6. Semoir (10) selon l'une des revendications précédentes, **caractérisé en ce que** l'élément de réduction pneumatique (60) comporte un segment de manchon (62) avec une surface extérieure (68) et un segment de couvercle (64) avec une section de passage réduite.

7. Semoir (10) selon la revendication 6, **caractérisé en ce que** la surface extérieure (68) du segment de manchon (62) de l'élément de réduction pneumatique (60) s'appuie, à l'état monté, sur la surface intérieure d'un tronçon de tube (50).

8. Elément de réduction pneumatique (60) pour un semoir (10) selon l'une des revendications précédentes, avec un segment de manchon cylindrique (62) avec une surface extérieure (68) et une surface intérieure (66) qui définit un passage cylindrique avec un premier diamètre, et avec un segment de couvercle circulaire (64) qui recouvre le passage cylindrique du segment de manchon (62) et un passage (70) circulaire, relié pneumatiquement avec le passage du segment de manchon cylindrique (62) avec un deuxième diamètre qui est plus petit que le premier diamètre, **caractérisé en ce que** le segment de couvercle (64) présente une arête (72) qui s'étend sur la surface extérieure (68) du segment de manchon (62).

9. Elément de réduction pneumatique (60) selon la revendication 8, **caractérisé en ce que** le segment de manchon (62) présente une arête chanfreinée (74) à l'extrémité éloignée du segment de couvercle (64).
